# EUROPEAN PATENT APPLICATION

(11) **EP 4 761 178 A1**
(43) Date of publication of application: **17.06.2026**
(21) Application number: 24865790.0
(22) Date of filing: 09.09.2024
(51) Int. Cl.: H04L 9/40, H04W 76/12, H04L 47/26, H04W 28/02, H04L 47/12

(54) **APPARATUS AND METHOD FOR SUPPORTING L4S IN NON-3GPP ACCESS ENVIRONMENT**

(30) Priority: 11.09.2023 KR 20230120599; 15.02.2024 KR 20240022040
(71) Applicant: Samsung Electronics Co., Ltd., Suwon-si, Gyeonggi-do 16677 (KR)
(72) Inventor: BAE, Jaehyeon, Suwon-si Gyeonggi-do 16677 (KR); LEE, Jicheol, Suwon-si Gyeonggi-do 16677 (KR)
(74) Representative: HGF
(86) International application number: PCT/KR2024/013613
(87) International publication number: WO 2025/058351

(57) **Abstract**

The present disclosure relates to a 5G or 6G communication system for supporting a higher data transmission rate, and relates to a method performed by a non-3GPP interworking function (N3IWF) entity of a wireless communication system, the method comprising the steps of: receiving, from a session management function (SMF) entity via an access and mobility management function (AMF) entity, session management information including an explicit congestion notification (ECN) marking indication for supporting low latency, low loss, and scalable throughput (L4S) in a non-3GPP access; determining a connection of Internet protocol security (IPsec) Child security association (SA) for a quality of service (QoS) flow supporting L4S; and transmitting, to a terminal, a message for requesting a IPsec Child SA connection.

## Description

### [Technical Field]

The disclosure relates to an apparatus and a method for supporting L4S in a communication system considering non-3GPP access.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, with the development of mobile communication systems, various services can now be provided, and there is a need for methods for effectively providing such services.

Low Latency, Low Loss and Scalable Throughput (L4S) services are supported by many devices and servers due to the advantage that signals indicating L4S (explicit congestion notification (ECN)) support and congestion can be delivered by in-band marking on existing protocols without requiring separate control-plane call processing signals between intermediate nodes.

In metaverse and XR applications, a relatively large amount of uplink data should be transmitted, and when network congestion occurs, a method of adjusting the uplink transmission rate in consideration of the network congestion may be applied. In order for services supporting L4S to be provided in a Non-3GPP access environment, there is a need for technical improvements regarding the delivery of L4S service-related information and operational methods.

### [Disclosure of Invention]

### [Technical Problem]

An aspect of the disclosure is to provide an apparatus and a method capable of providing congestion information in a communication system including non-3GPP access.

An aspect of the disclosure is to provide an apparatus and a method for providing congestion information, based on whether L4S (ECN) is supported, in a communication system based on non-3GPP access.

### [Solution to Problem]

According to an aspect of the disclosure, a method performed by a non-3GPP interworking function (N3IWF) entity in a non-3GPP access-based communication system includes including L4S support indicator information in an NGAP initial context setup response message to transmit same to an AMF, receiving an N2 PDU session request message including the L4S support indicator information from the AMF, determining, based on the N2 PDU session request message, the number of IPsec Child Sas, and establishing an IPsec Child SA.

According to an aspect of the disclosure, an operation method of a non-3GPP interworking function (N3IWF) entity in a non-3GPP access-based communication system is provided, the operation method including receiving a message including information related to whether a Low Latency, Low Loss, and Scalable Throughput (L4S) service is supported by an S-RAN in an IPsec tunnel among a UE, a non-3GPP access point (AP), and the N3IWF, transferring, to a session management function (SMF) through an AMF, information on an ECN marking support indicator (ECN marking supporting indication in a non-3GPP AP or ECN marking supporting indication in an IPsec SA) in a corresponding IPsec security association (SA) section during a UE registration request on a 5G system after an IPsec SA, transmitting, to an SMF entity, a protocol data unit (PDU) session management (SM) update request message including information related to whether the N3IWF supports the L4S service, based on an L4S service support indicator message, and receiving a PDU SM update response message from the SMF entity as a response to the PDU SM update request message.

According to an aspect of the disclosure, an access and mobility management function (AFM) entity is provided, the AMF entity including a transceiver and at least one processor, wherein the at least one processor is configured to receive, through the transceiver, a message including information related to whether an N3IWF supports a Low Latency, Low Loss, and Scalable Throughput (L4S) service from the N3IWF connected to a UE, transmit, to a session management function (SMF) entity, a protocol data unit (PDU) session management (SM) update request message including information on whether an S-RAN supports an L4S service, and receive a PDU SM update response message from the SMF entity through the transceiver, as a response to the PDU SM update request message.

### [Advantageous Effects of Invention]

According to an embodiment of the disclosure, in order for a UE to use a non-3GPP access-based base station, while the UE searches for an N3IWF and performs an IPsec SA process among the UE, a non-3GPP AP, and the N3IWF, the UE may determine whether ECN marking and L4S are supported among the UE, the non-3GPP AP, and the N3IWF, and may transfer the corresponding ECN/L4S capability information to an AMF through a UE registration process or transfer the same to a session management function (SMF) entity during a PDU session connection request. In a case where an L4S support indicator is transferred from an AF or the like to the N3IWF, when the N3IWF may perform ECN marking for the L4S service support, for uplink packets, ECN marking may be performed based on information of the outer header of the IPsec packet and information on the congestion situation of the non-3GPP AP. In addition, for a downlink, the UE may also report the congestion situation information to the AS, based on CE information in the outer header to identify the congestion situation of the non-3GPP AP.

In general, in order to access the 5G system through non-3GPP access, IPsec tunneling may be performed between the UE and the N3IWF, whereby the UE can perform an authorization and security procedure for the use of the corresponding N3IWF. In non-3GPP access, ECN marking may be distinguished as ECN information in an inner IP header including ECN information of a UE for an uplink and ECN information of an N3IWF for a downlink, and ECN information of an outer header that indicates the congestion situation of the non-3GPP AP for each data transmission. In general, in the IPsec tunnel mode, the ECN-capable connection may be transferred in two methods including limited-functionality in which only information of an inner header is used for security reasons, and full functionality in which information of an outer header is also considered.

As an example of the disclosure, in the case of non-3GPP access using the N3IWF, an IKEv2-based key exchange protocol is generally used when performing an IPsec SA operation, and in the case of an IPsec SA supporting ECN connected by an IKEv2-based protocol, an ECN functionality operation scheme in the IPsec tunnel can be generally supported as the full functionality.

Information on a congestion situation occurring with the N3IWF may be transferred to a user plane function (UPF) entity through QoS monitoring, and the UPF entity may perform L4S (ECN) marking, and then inform the application server (AS) of a congestion situation via in-band signaling. In this case, the N3IWF may generate congestion information of the non-3GPP AP, based on the ECN bit information in the outer header of an IPsec packet, and transfer the same to the UPF through a GTP-U extended header. In addition, the congestion information may occur not only in the non-3GPP AP but also in the N3IWF. In this case, during the generation of the congestion information, when the information is ECN marking for a downlink data packet, the ECN bit information of the inner header of the IPsec packet may be transferred to the UPF, and when the information is ECN marking information for an uplink data packet, the ECN bit information of the outer header may be transferred to the UPF. When a congestion situation occurs in both the network entities (N3IWF and non-3GPP AP), the congestion information may include congestion information from the N3IWF and congestion information from the non-3GPP AP, and the congestion information of each network entity may be separately transferred.

In addition, after establishing the IPsec SA, the N3IWF may receive a PDU session establishment request message from the UE and then transmit the same to the SMF through the AMF, so as to receive a QoS profile and a related QFI, a PDU session ID, and/or a PDU session establishment accept message through the AMF. Based on the information, the N3IWF may determine the number of IPsec Child SAs for each QoS. In this case, if there exists a QoS flow having an L4S support request among the QoS flows received from the AMF, the N3IWF may determine to generate an IPsec Child SA in consideration thereof. If the N3IWF receives information indicating that there are 9 general QoS flows and one QoS flow requires an L4S service from the AMF, the N3IWF may provide services for the general QoS flows by using one IPsec SA as IPSEC Child SA #1 to provide an IPsec tunnel between the UE and the N3IWF, and may determine service utilization by generating a separate channel as IPsec Child SA #2 for the QoS flow for which an L4S service is required, in addition to the general IPsec Child SA channel. As in the example above, the N3IWF may not provide a service using ECN among services using non-3GPP access, due to security reasons, according to a selection of the UE or a selection of the service provider. In this case, with respect to the IPsec Child SA connected to the same UE, the N3IWF may determine a connection of two or more IPsec Child SAs including an IPsec Child SA for transmitting a general QoS flow and an IPsec Child SA for transmitting a QoS flow supporting an L4S service through ECN marking.

According to an embodiment of the disclosure, congestion information is provided based on whether L4S (ECN) is supported in a non-3GPP access-based communication system, whereby an L4S service can be provided in the non-3GPP access-based communication system.

### [Brief Description of Drawings]

FIG. 1 illustrates a network structure and interfaces of a 5G system according to an embodiment of the disclosure.
FIG. 2 illustrates a 5GC registration process through untrusted non-3GPP access of a UE according to an embodiment of the disclosure.
FIG. 3 illustrates an operation of an N3IWF according to a request for L4S service support for a QoS flow being serviced via untrusted non-3GPP access in an AF according to an embodiment of the disclosure.
FIGS. 4A and 4B are flow charts illustrating an operation of transferring, to an SMF, ECN capability information of an IPsec SA during a 5GC registration and PDU session connection process via untrusted non-3GPP access according to an embodiment of the disclosure.
FIG. 5A is a flow chart illustrating an operation and a method of updating a QoS flow for L4S support according to an embodiment of the disclosure.
FIG. 5B is a flow chart illustrating an operation and a method of updating a QoS flow for L4S support according to an embodiment of the disclosure.
FIG. 6 illustrates an example of a functional structure of a UE according to an embodiment of the disclosure.
FIG. 7 illustrates an example of a functional structure of a network entity according to an embodiment of the disclosure.

### [Best Mode for Carrying out the Invention]

Hereinafter, an embodiment of the disclosure will be described in detail with reference to the accompanying drawings.

In describing the disclosure, descriptions related to technical contents well-known in the art and not associated directly with the disclosure will be omitted. Such an omission of unnecessary descriptions is intended to prevent obscuring of the main idea of the disclosure and more clearly transfer the main idea. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

In the following description, a base station is an entity that allocates resources to terminals, and may be at least one of a gNode B, an eNode B, a Node B (or xNode B (where, x is an alphabet including g or e)), a wireless access unit, a base station controller, a satellite, an airborne, and a node on a network. A user equipment (UE) may include a mobile station (MS), a vehicular, a satellite, an airborne, a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Additionally, a "sidelink (SL)" may exist, which refers to a radio link via which a UE transmits a signal to another UE.

Furthermore, in the following description, LTE, LTE-A, or 5G systems may be described by way of example, but the embodiments of the disclosure may also be applied to other communication systems having similar technical backgrounds or channel types. For example, 5G-Advance, NR-Advance, or 6th generation (6G) mobile communication technologies developed beyond 5G mobile communication technologies (or new radio (NR)) may be included therein, and in the following description, the "5G" may be the concept that covers the exiting LTE, LTE-A, or other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

The 3GPP, which is responsible for cellular mobile communication standardization, has introduced a new core network structure named 5G core (5GC) and is pursuing the standardization in order to push evolution from a 4G LTE system to a 5G system. 5GC supports the following distinguishable functions, compared to an evolved packet core (EPC) that is a network core for 4G.

In 5GC, a network slicing function is introduced. As requirements of 5G, 5GC is required to support various terminal types and services (e.g., enhanced mobile broadband (eMBB), ultra reliable low latency communications (URLLC), and massive machine type communications (mMTC)). Such terminals/services each have different requirements for a core network. For example, the eMBB service may require a high data rate, and the URLLC service may require high stability and low latency. A network slicing technology has been proposed to satisfy these various service requirements.

Network slicing may mean a method of virtualizing one physical network to make many logical networks (e.g., network slices). Activated network slices may be called network slice instances, and each network slice instance (NSI) may have a different characteristic. A mobile communication service provider may configure a network function (NF) suitable for the characteristic of each NSI so as to satisfy various service requirements according to terminals/services. For example, the mobile communication service provider may assign an NSI suitable for the characteristic of a service required thereby, so that many 5G services (e.g., eMBB, URLLC, or mMTC) are efficiently supportable.

5GC may easily support a network virtualization paradigm by separating a mobility management function and a session management function. In 4G LTE, all terminals have been provided with services from a network through signaling exchange with single core equipment, which is called a mobility management entity (MME) serving as registration, authentication, and a mobility management and session management function. In 5G, as the number of terminals (including, for example, MTC terminals) has explosively increased and mobility and traffic/session characteristics to be supported have been subdivided according to terminal types, scalability for adding entities according to required functions is inevitably reduced if a single entity (for example, MME) supports all the functions. Therefore, in order to improve scalability in terms of signaling loads and the function/implementation complexity of a core entity responsible for a control plane, various functions are being developed based on a structure of separating a mobility management function and a session management function.

Embodiments according to the disclosure may indicate a method for supporting a PDU set establishment request procedure of the UE in untrusted or trusted non-3GPP access for connection to a 5GC through a non-3GPP access point in the UE, and a process for performing a related operation. Specifically, embodiments according to the disclosure may indicate a method and a related operation for supporting an L4S-based service for appropriate congestion situation control by transferring congestion situation information to an AS or a UE when a congestion situation occurs in a network. In a non-3GPP access environment, the UE may perform an IPsec SA connection operation between the UE and the N3IWF to perform a UE registration procedure for the use of a service through the 5GC. During the IPsec SA connection establishment procedure between the UE and the N3IWF, whether the IPsec SA supports ECN/L4S may be determined together, and this information may be transferred to the AMF during the UE 5GC registration process. For example, if ECN marking is supported in a non-3GPP access point during establishment of an IPsec SA connection between the corresponding UE and N3IWF, the UE connected through the non-3GPP access point may transmit information indicating that L4S-based service is supported to the network. Information indicating that the IPsec SA between the UE and the N3IWF through a specific non-3GPP access point supports ECN may be stored first in the AMF through a registration procedure in the 5GC. In addition, if a PDU session establishment request is received from the UE afterwards, the information may be transferred from the AMF to the SMF during the corresponding PDU session establishment procedure. Alternatively, when the N3IWF does not transfer information on whether the IPsec SA supports ECN to the AMF during a separate registration procedure, the UE may include the information on whether the IPsec SA supports ECN/L4S in a PDU session establishment request message through a separate indicator (e.g., L4S support indication for IPsec SA), and transmit the same. Through the above process, the SMF may recognize that the IPsec SA between the UE and the N3IWF connected through the specific non-3GPP access point is capable of supporting the L4S service. When the L4S support request information for a specific QoS flow is transferred to the PCF via the AF during service usage through non-3GPP access, the PCF may transfer the L4S service support request information of the specific QoS flow to the SMF through a PCC rule update process. The SMF may determine whether to accept the L4S service support request information of the specific QoS flow, based on a pre-configured policy or information transferred during the PDU session establishment process. The SMF may receive the information on whether the IPsec SA supports ECN from the AMF or the UE during the PDU session establishment procedure, and may determine, based on the information, whether to accept the L4S service support request information of the specific QoS flow of the UE, transferred from the AF. In addition, whether the SMF supports the L4S service of the specific QoS flow may be determined based on a case where the N3IWF connected to the UE using a service through non-3GPP access is able to directly mark information on a congestion situation in an ECN bit in the ToS field in IP headers, or a case where the N3IWF is able to support marking of congestion information in a GTP-U extension header so that congestion information may be transferred to the UPF through the GTP-U extension header. If the N3IWF supports one or more of the two marking methods for transferring congestion information, the SMF may determine that the N3IWF can support the L4S service. The SMF may know the information on whether to support the ECN marking operation for the transfer of the congestion information by the N3IWF since the information on the marking methods that are supportable is received from the N3IWF during the PDU session establishment process. The SMF may recognize in advance the congestion information marking support operation information of the N3IWF and supporting of ECN/L4S marking by the IPsec SA between the N3IWF and the UE using the corresponding QoS flow, and the SMF may determine, based thereon, whether to accept the L4S service support request of the specific QoS flow, transmitted from the AF.

If the N3IWF is unable to perform ECN marking on the occurrence of congestion information within the IP header, the SMF may include the congestion information in a GTP-U extension header and transfer the same to the UPF. In this case, the SMF may determine whether the UPF is capable of performing ECN marking, and if the corresponding function is not supported by the UPF, the SMF may determine to change to a UPF that supports the ECN marking operation.

The SMF may determine whether a specific QoS flow requested by the AF supports L4S, based on the ECN marking support of the IPsec SA and the operation of the UPF according to the method of transmitting congestion information by the N3IWF. If it is determined that L4S is not supported, the SMF may inform to the AF that L4S-based service is not available for the corresponding QoS flow.

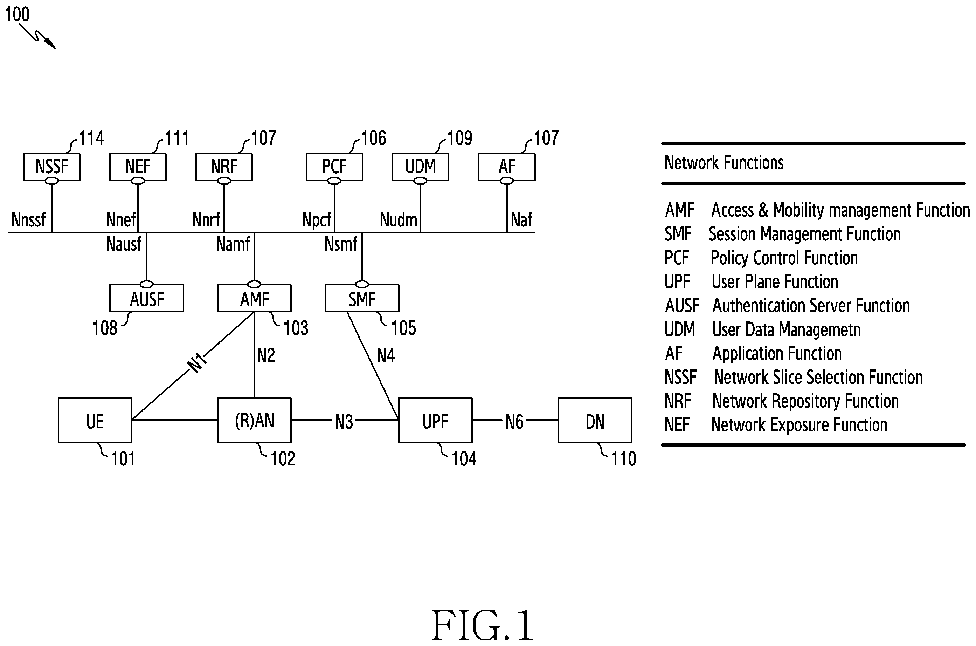

FIG. 1 illustrates a network structure and interfaces of a 5G system according to an embodiment of the disclosure.

Network entities included in the network structure of the 5G system in FIG. 1 may include network functions (NFs), depending on system implementations.

Referring to FIG. 1, the network structure of the 5G system 100 may include various network entities. For example, the 5G system 100 may include an authentication server function (AUSF) entity 108, a (core) access and mobility management function (AMF) entity 103, a session management function (SMF) entity 105, a policy control function (PCF) entity 106, an application function (AF) entity 107, a unified data management (UDM) entity 109, a data network (DN) 110, a network exposure function (NEF) entity 111, a network slicing selection function (NSSF) entity 114, an edge application service domain repository (EDR), an edge application server (EAS), an EAS discovery function (EASDF), a user plane function (UPF) entity 104, a (radio) access network (R)AN) 102, and a terminal, e.g., a user equipment (UE) 101.

The respective NFs in the 5G system 100 may support the following functions.

The AUSF 108 processes and stores data for authentication of the UE 101.

The AMF 103 may provide a function for access and mobility management on a per-UE basis, and basically, one UE may be connected to one AMF. Specifically, the AMF 103 supports functions, such as inter-CN node signaling for mobility between 3GPP access networks, termination of a radio access network (RAN) CP interface (i.e., N2 interface), termination (N1) of non-access stratum (NAS) signaling, NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, support of network slicing, SMF selection, lawful interception (for an AMF event and an interface to an LI system), provision of transfer of a session management (SM) message between a UE and an SMF, a transparent proxy for SM message routing, access authentication, access authorization including a roaming right check, provision of transfer of an SMS message between a UE and an SMSF, a security anchor function (SEA) and/or security context management (SCM). Some or all of the functions of the AMF entity 103 may be supported in a single instance of one AMF entity.

The DN 110 refers to, for example, an operator service, internet access, or a third-party service. The DN 110 transmits a downlink protocol data unit (PDU) to the UPF 104, or receives, from the UPF 104, a PDU transmitted by the UE 101.

The PCF entity 106 provides a function of receiving information on a packet flow from an application server to determine policies, such as mobility management and session management. Specifically, the PCF entity 106 supports functions, such as supporting a unified policy framework for controlling network operations, providing policy rules so that control plane function(s) (e.g., AMF entity, SMF entity, etc.) can enforce the policy rules, and implementing a front end for accessing relevant subscription information for policy decisions in a user data repository (UDR).

The SMF entity 105 provides a session management function, and if the UE 101 has multiple sessions, each session may be managed by a different SMF entity. Specifically, the SMF entity 105 supports functions, such as session management (e.g., establishment, modification, and release of a session, including maintenance of a tunnel between the UPF entity 104 and the (R)AN 102 node), assignment and management of UE IP addresses (optionally including authentication), selection and control of a UP function, configuration of traffic steering to route traffic from the UPF entity 104 to appropriate destinations, and termination of interfaces toward policy control functions, enforcement of control parts of policy and quality of service (QoS), lawful intercept (LI) (for an SM event and an interface to an LI system), termination of SM parts of NAS messages, downlink data notification, delivery of access network (AN)-specific SM information to (R)AN 103 through N2 via an initiator (AMF entity 102), determination of a session and service continuity (SSC) mode, and a roaming function. Some or all of the functions of the SMF entity 105 may be supported in a single instance of one SMF entity.

The UDM entity 109 stores the user's subscription data, policy data, and the like. The UDM entity 109 includes two parts, that is, an application front end (FE) (not illustrated) and a user data repository (UDR) (not illustrated).

The FE includes a UDM FE responsible for location management, subscription management, credential processing, and the like, and a PCF entity responsible for policy control. The UDR stores data required for functions provided by the UDM-FE, and a policy profile required by the PCF entity. Data stored in the UDR includes policy data and user subscription data including subscription identifiers, security credentials, subscription data related to access and mobility, and session-related subscription data. The UDM-FE supports functions, such as access to subscription information stored in the UDR, authentication credential processing, user identification handling, access authentication, registration/mobility management, subscription management, and SMS management.

The UPF entity 104 transfers a downlink PDU received from the DN 110 to the UE 101 via the (R)AN 102, and transfers, to the DN 110, an uplink PDU received from the UE 101 via the (R)AN 102. Specifically, the UPF entity 104 supports a function, such as an anchor point for intra/inter-RAT mobility, an external PDU session point of interconnection to a data network, packet routing and forwarding, packet inspection and a user plane part of policy rule enforcement, lawful interception, traffic usage reporting, an uplink classifier for supporting to route traffic flows to a data network, a branching point for supporting a multi-homed PDU session, QoS handling for a user plane (e.g., packet filtering, gating, and uplink/downlink rate enforcement), uplink traffic verification (service data flow (SDF) mapping between an SDF and a QoS flow), transport level packet marking in uplink and downlink, and a downlink packet buffering and downlink data notification triggering function. Some or all of the functions of the UPF entity 104 may be supported within a single instance of one UPF.

The AF entity 107 interacts with a 3GPP core network for service provision (e.g., support of a function, such as application influence on traffic routing, access to network capability exposure, and interaction with a policy framework for policy control).

The (R)AN 102 refers to a new radio access network supporting both evolved E-UTRA (E-UTRA) which is an evolved version of 4G radio access technology, and new radio (NR) access technology (e.g., gNB), as a whole.

The gNB supports functions, such as functions for radio resource management (i.e., radio bearer control, radio admission control, connection mobility control, and dynamic allocation of resources (i.e., scheduling) to the UE in an uplink/downlink), Internet protocol (IP) header compression, encryption and integrity protection of a user data stream, selection of the AMF upon attachment of the UE when routing to the AMF has not been determined based on information provided to the UE, user plane data routing to the UPF(s), control plane information routing to the AMF, connection setup and release, paging message scheduling and transmission (generated from the AMF), system broadcast information scheduling and transmission (generated from the AMF or operation and maintenance (O&M)), measurement and measurement report configuration for mobility and scheduling, transport level packet marking in the uplink, session management, support of network slicing, QoS flow management and mapping to a data radio bearer, support of the UE that is in an inactive mode, a distribution function of a NAS message, a NAS node selection function, radio access network sharing, dual connectivity, and tight interworking between the NR and the E-UTRA.

The UE 101 refers to a user equipment. The user equipment may be referred to as the term "terminal", "mobile equipment (ME)", "mobile station (MS)", or the like. In addition, the user equipment may be a portable device, such as a laptop, a mobile phone, a personal digital assistant (PDA), a smartphone, or a multimedia device, or may be a non-portable device, such as a personal computer (PC) or a vehicle-mounted device.

The NEF 111 provides a means for securely exposing services and capabilities provided by 3GPP network functions, for, for example, a 3rd party, internal exposure/re-exposure, application functions, and edge computing. The NEF 111 receives information (based on the exposed capability (capabilities) of (an)other NF(s)) from the other NF(s). The NEF 111 may store information received as data structured by using a standardized interface as a data storage network function. The stored information may be re-exposed by the NEF entity 111 to other NF entity(entities) and AF entity (entities) and used for other purposes such as analysis.

The EASDF is an NF that may add, for each FQDN, an address of a DNS server to forward a DNS request of a UE, and an ECS option expressible by an IP subnet address to be added when forwarding a DNS request of a UE. The EASDF receives EAS domain configuration information from the EDR, and processes a DNS request message, received from the UE, according to the received information. In addition, the EASDF is an NF that performs a function of receiving, from the SMF 105, a UE IP address, location information of the UE in 3GPP, a DNS message handling rule, and a DNS message reporting rule, handling a DNS query message received from the UE and a DNS response message received from a DNS server, and transmitting, according to the DNS message reporting rule, information in a DNS message and statistical information obtained by processing same to the SMF 105.

The NRF supports a service discovery function. The NRF receives an NF discovery request from an NF instance, and provides discovered NF instance information to the NF instance. In addition, the NRF maintains available NF instances and services supported by the available NF instances.

Although FIG. 1 illustrates a reference model in which the UE 101 accesses one DN 110 by using one PDU session for the sake of descriptive convenience, the disclosure is not limited thereto.

The UE 101 may concurrently access two (i.e., local and central) data networks by using multiple PDU sessions. In this case, two SMFs may be selected for different PDU sessions. However, each SMF may have the capability to control both the local UPF and central UPF within the PDU session.

In addition, the UE 101 may concurrently access two (i.e., local and central) data networks provided within a single PDU session.

In 3GPP systems, conceptual links connecting NFs in the 5G system are defined as "reference points". As an example, reference points included in the 5G system 100 of FIG. 1 are as follows.
- N1: A reference point between a UE 101 and an AMF 103
- N2: A reference point between an (R)AN 102 and an AMF 103
- N3: A reference point between an (R)AN 102 and a UPF 104
- N4: A reference point between an SMF 105 and a UPF 104
- N5: A reference point between a PCF 106 and an AF 107
- N6: A reference point between a UPF 104 and a DN 110
- N7: A reference point between an SMF 105 and a PCF 106
- N8: A reference point between a UDM 109 and an AMF 103
- N10: A reference point between a UDM 109 and an SMF 105
- N11: A reference point between an AMF 103 and an SMF 105
- N12: A reference point between an AMF 103 and an AUSF 108
- N13: A reference point between a UDM 109 and an AUSF 108
- N14: A reference point between two AMFs 103
- N15: A reference point between a PCF and an AMF for a non-roaming scenario, and a reference point between a PCF and an AMF in a visited network for a roaming scenario
- Nx: A reference point between an SMF 105 and an EASDF
- Ny: A reference point between an NEF (EDF) 111 and an EASDF

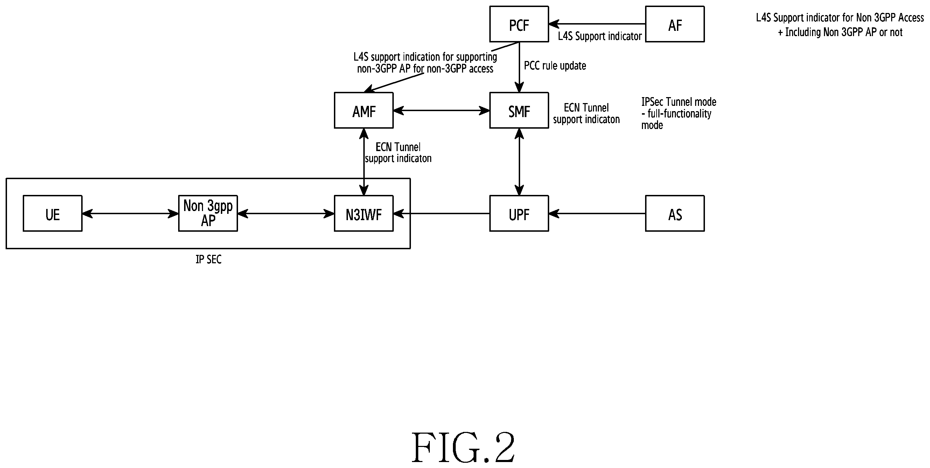

FIG. 2 illustrates a 5GC registration process through untrusted non-3GPP access of a UE according to an embodiment of the disclosure. More specifically, FIG. 2 illustrates an operation in which whether ECN/L4S is supported in IPsec SA between a UE and an N3IWF during a 5GC registration process is delivered to a network.

Referring to FIG. 2, the N3IWF may connect a UE connected by non-3GPP access to a 5G core network through IKEv2/IPsec protocols and N2 interface interworking. An IPsec SA connection may be established between the UE and the N3IWF through a separate security and authentication procedure. In this case, a message protocol used for the security and authentication procedure is an Internet Key Exchange (IKE) v2 protocol. Unlike the existing structure between the UE and the NG-RAN, a non-3GPP access point (e.g., Wi-Fi) may be added between the UE and the N3IWF in the non-3GPP access. The UE may exchange data with the N3IWF through the non-3GPP access point, and in this case, the IP header and payload delivered to the existing N3IWF may be defined as an inner IP packet according to the structure of IPsec. In the IPsec tunnel mode, an additional outer IP packet which has the corresponding inner IP packet as a payload may be defined. That is, in the IPsec SA section, an outer IP packet may be generated, and the same may be transferred to the UE through the non-3GPP access point. For example, in the case of uplink, an IP packet transmitted from the UE may be included in the payload of an outer IP packet, as an inner IP packet, and transmitted. Accordingly, the non-3GPP AP may transfer congestion situation information of the corresponding non-3GPP access section to the UE or the N3IWF through the header of the outer IP packet. The UE and the non-3GPP AP, and the N3IWF may exchange ECN capable transport (ECT) information through the IP header during the process of establishing an IPsec SA, and the SMF may determine, based the information, whether to support ECN marking and L4S service of the IPsec SA. The non-3GPP access IPsec SA may exchange authentication and security messages by using IKEv2. In this case, when ECN or L4S is supported in the IPsec SA, this may support full-functionality enabling adding the congestion information of the non-3GPP access section to the outer IP header.

The information that the IPsec SA between the UE and the N3IWF supports ECN may be first stored in the AMF through the 5GC registration procedure, and thereafter, when a PDU session establishment request is received from the UE, the information may be transferred from the AMF to the SMF during the corresponding PDU session establishment procedure. Alternatively, in case that the N3IWF does not transmit the information on whether the IPsec SA supports ECN or L4S to the AMF during a separate registration procedure, the UE may include the information regarding whether the IPsec SA supports ECN/L4S in a PDU session establishment request message through a separate indicator (L4S support indication for IPsec SA), and transmit the same to the SMF.

The SMF may recognize that the L4S service is supported through the IPsec SA between the UE and the N3IWF, connected through a specific non-3GPP AP.

When L4S support request information for a specific QoS flow is transferred to a PCF through the AF during service usage via non-3GPP access, the PCF may transfer the L4S service support request information for the specific QoS flow to the SMF through a PCC rule update process. The SMF may determine whether to accept a request for L4S service support for the specific QoS flow, based on a pre-configured policy or information delivered during the PDU session establishment process. The SMF may receive, in the PDU session establishment process, information on whether ECN is supported in the IPsec SA from the AMF or the UE, and may determine, based the information, whether to accept the request for L4S service support for the specific UE from the AF. In addition, the SMF may determine, based on whether the N3IWF satisfies the following conditions, whether to accept the request for L4S service support for the specific QoS flow. The N3IWF may be determined to support the L4S service if the N3IWF is capable of marking information on a congestion situation in an ECN bit in the ToS field in IP headers, or if the N3IWF is capable of marking congestion information in a GTP-U extension header and transferring the same to the UPF. In addition, in a case where a service through non-3GPP access, the SMF may determine whether to accept the request for L4S service support for the corresponding QoS flow using a non-3GPP access when the N3IWF supports one or more marking methods for the transmission of congestion information, and ECN/L4S service support is possible (ECN capable) in the IPsec SA section between the corresponding N3IWF and the UE.

The SMF may receive information on marking operations (IP header marking or GTP-U header marking) for delivering the congestion information by the N3IWF from the N3IWF during the PDU session establishment process. The SMF may determine whether to accept the request for L4S service for a specific QoS flow, based on the congestion information marking support operation information of the N3IWF, and information on whether the UPF supports the operation for marking an ECN bit in the IP header according to the congestion information marking support operation, and whether the IPsec SA supports ECN/L4S for the corresponding QoS flow.

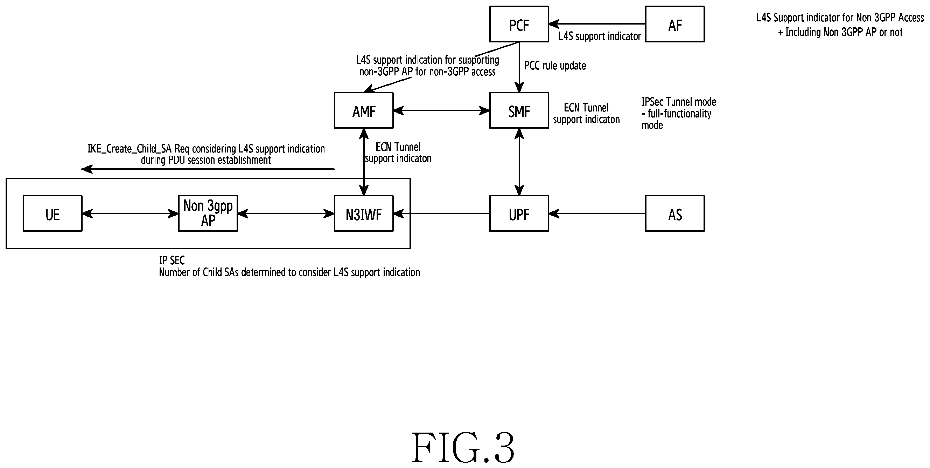

FIG. 3 illustrates an operation of an N3IWF according to a request for L4S service support for a QoS flow being serviced via untrusted non-3GPP access in an AF according to an embodiment of the disclosure.

As illustrated in FIG. 2, the information indicating that ECN/L4S can be supported in the IPsec SA during establishing the IPsec SA connection between the UE and the N3IWF may be stored in an AMF during a 5GC registration procedure of the UE via the N3IWF. In addition, during the subsequent PDU session establishment request procedure, the information on whether the IPsec SA supports ECN/L4S, stored in the AMF, may be transferred to an SMF. Alternatively, the information on whether the IPsec SA supports ECN/L4S may not be transferred through the 5GC registration procedure, and the UE may include a separate indicator (L4S support indication for IPsec SA) regarding whether the IPsec SA supports ECN/L4S in a PDU session establishment request message and transmit the same to the SMF. Accordingly, the SMF may recognize that L4S service can be supported by the IPsec SA between the UE and the N3IWF via a specific non-3GPP AP.

When L4S support request information for a specific QoS flow is transferred to a PCF through the AF during service usage via non-3GPP access, the PCF may transfer the L4S service support request information of the specific QoS flow to the SMF through a PCC rule update process. The SMF may determine whether to accept the L4S service support request for the specific QoS flow, based on a pre-configured policy or information transferred during the PDU session establishment process. The SMF may receive information on whether the IPsec SA supports ECN from the AMF or the UE during the PDU session establishment process, and may determine, based on the information, whether to accept the L4S service support request for the QoS flow of the specific UE, transferred from the AF. In addition, the SMF may determine whether to accept the L4S service support request for the specific QoS flow, based on whether the N3IWF satisfies the following conditions. In a case where the N3IWF is able to directly mark information on a congestion situation in a ToS field in an IP header, or a case where the N3IWF is able to mark congestion information in a GTP-U extension header and transmit the same to the UPF, it may be determined that the N3IWF can support the L4S service. In addition, in a case where a service via non-3GPP access is used, the SMF may determine whether to accept the L4S service request for the corresponding QoS flow using non-3GPP access when the N3IWF supports one or more marking methods for transferring congestion information and ECN/L4S service support is possible (ECN capable) in the IPsec SA section between the N3IWF and the UE.

The SMF may receive, from the N3IWF during the PDU session establishment process, information on marking operations (IP header marking or GTP-U header marking) for transferring congestion information by the N3IWF. The SMF may determine whether to accept the L4S service support request for the specific QoS flow, based on the congestion information marking support operation information of the N3IWF, and information on whether the UPF supports the operation for marking an ECN bit in the IP header according to the congestion information marking support operation, and whether the IPsec SA supports ECN/L4S for the corresponding QoS flow.

The N3IWF having received the L4S service support indicator (L4S support indication) or the congestion information marking request information for the L4S service support may identify an IPsec Child SA including a QoS flow for which L4S service support has been requested, and then when the corresponding IPsec Child SA is configured to support ECN/L4S, the N3IWF may perform L4S service support through ECN/L4S marking on the current IPsec Child SA. However, in a case where the specific QoS flow for which L4S service support has been requested is included in an IPsec Child SA that does not support ECN, when there is a separate IPsec Child SA supporting ECN, the N3IWF may move to the IPsec Child SA for the corresponding QoS flow, and when there is no separate IPsec Child SA, the N3IWF may transfer a connection request for an IPsec Child SA to the UE to newly connect an IPsec child SA that supports ECN. With respect to an operation in which the N3IWF connects a separate IPsec child SA for the QoS flow to support the L4S service, the PCF may perform the corresponding operation based on a pre-configured parameter related to the specific QoS flow while requesting the PDU session establishment from the UE, or whether to perform the operation may be determined according to a separate PDU session change request by the AMF during service use, the request including L4S service support indicator information for the specific QoS flow, and the like.

Thereafter, after establishing a new IPsec SA connection for ECN support, the N3IWF may migrate resources of the QoS flow for which L4S service support has been requested to the corresponding IPsec SA, and may separately transmit L4S support indication information to the UE or transmit policy information to the UE when establishing the new IPsec SA connection, in order to inform that the UE also needs to perform the L4S/ECN operation.

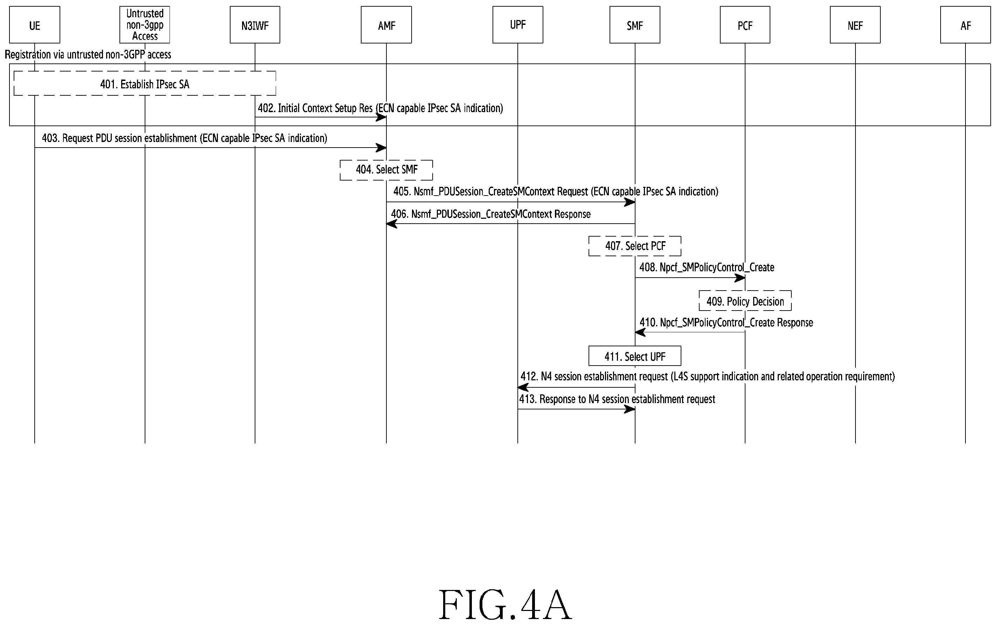

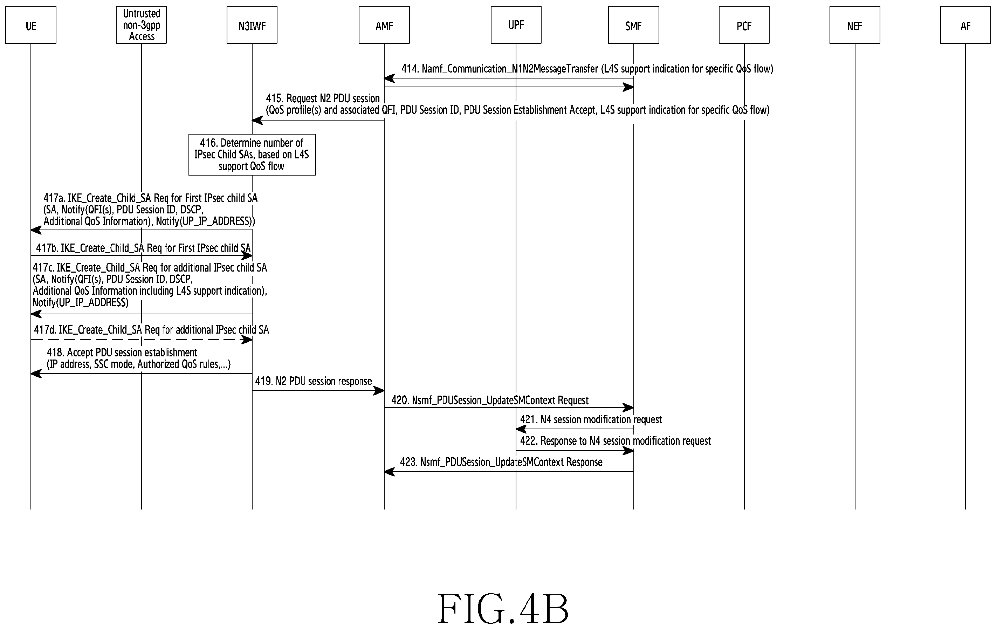

FIGS. 4A and 4B illustrate an operation of transferring, to an SMF, ECN capability information of an IPsec SA during a 5GC registration and PDU session connection process via untrusted non-3GPP access according to an embodiment of the disclosure.

In operation 401, the UE may transmit a request message for establishing an N3WIF and IPsec SA connection and 5GC registration. The UE may receive information including information on the N3IWF and the related IP address, etc., based on information received from an untrusted non-3GPP access network. Thereafter, the UE may select an N3IWF, based on the information received from the untrusted non-3GPP access network, and may obtain IP address information of the selected N3IWF. The UE may initiate an IKE initial exchange to configure an IPsec security connection (SA) with the selected N3IWF. All subsequent IKE messages may be encrypted and protected for integrity by using an IKE SA configured in this operation. The UE may transmit an IKE_AUTH request message to initiate an IKE_AUTH exchange. The N3IWF may respond with an IKE_AUTH response message including an EAP-Request/5G-Start packet. The EAP-Request/5G-Start packet may notify the UE to start an EAP-5G session. The UE may transmit an IKE_AUTH request including an EAP-Response/5G-NAS packet including an access network parameter (AN parameter) and a registration request message. The AN parameter may include information used by the N3IWF to select an AMF in the 5G core network. This information may include a GUAMI, a selected PLMN ID, requested NSSAI, establishment cause, etc. The establishment cause may provide a reason for requesting a signaling connection with the 5GC. Whether the UE includes the requested NSSAI as a part of an AN parameter and the method of including the same may differ according to a value of an access stratum connection establishment NSSAI inclusion mode parameter. The registration request may include an indication that selection of an N3IWF by the UE is supported based on a slice that the UE intends to use via untrusted non-3GPP access. The N3IWF may select an AMF, based on the received AN parameter and a local policy. Thereafter, the N3IWF may transfer the registration request received from the UE to the selected AMF via an N2 message. The selected AMF may determine to transmit a NAS identity request message to the UE to request the SUCI. This NAS message and all subsequent NAS messages may be protected within an EAP/5G-NAS packet and transmitted to the UE. The AMF may determine to authenticate the UE by using an AUSF. The AMF may transmit a NAS security mode command to the UE to activate NAS security. The N3IWF having received the NAS security mode command message may include the same in the EAP/5G-NAS packet and transfer the same to the UE. The UE may complete the EAP-AKA' authentication, generate a NAS security context and an N3IWF key, and transmit an EAP/5G-NAS packet including a NAS security mode completion message. The N3IWF may transfer the NAS security mode completion message to the AMF. When receiving the NAS security mode completion, the AMF may transmit an NGAP initial context setup request message including the N3IWF key to the N3IWF. This may trigger the N3IWF to transmit EAP-Success to the UE to complete the EAP-5G session and prevent further exchange of EAP-5G packets. An IPsec SA between the UE and the N3IWF may be established using a common N3IWF key generated by the UE and received by the N3IWF. After the signaling IPsec SA establishment, the N3IWF may transmit an NGAP initial context setup response to the AMF (operation 402) to notify that a UE context including AN security has been generated. The signaling IPsec SA needs to be configured to operate in a tunnel mode, and the N3IWF may assign an "inner" IP address to the UE. All subsequent NAS messages exchanged between the UE and the N3IWF may be transmitted through the signaling IPsec SA and transferred through TCP/IP. The UE may transmit a NAS message in a TCP/IP packet in which the source address is the "internal" IP address of the UE and the destination address is NAS_IP_ADDRESS. Similarly, the N3IWF may transmit a NAS message in a TCP/IP packet in which the source address is NAS_IP_ADDRESS and the destination address is the "internal" IP address of the UE. A TCP connection used for reliable NAS transmission between the UE and the N3IWF may be started by the UE immediately after the signaling IPsec SA is configured. The AMF may determine the requested NSSAI allowed by the subscribed S-NSSAI(s). The AMF may transmit an NAS registration approval message through an N2 message to be transmitted to the N3IWF. The N2 message may include an allowed NSSAI for the access type of the UE. The allowed NSSAI may be a part of a slice supported by the selected N3IWF. The N3IWF may transfer a NAS registration acceptance message to the UE through the signaling IPsec SA.

In operation 402, when the N3IWF is able to know whether the IPsec SA supports ECN/L4S in the IPsec SA establishment process, the N3IWF may include the ECN/L4S support indicator information in an NGAP initial context setup response message and transfer the same to the AMF.

In operation 403, the UE may transfer an N1 SM container, and the like including S-NSSAI(s), a UE requested DNN, a PDU session ID, a request type, an old PDU session ID, and/or a PDU session establishment request to the AMF by using a NAS message. The PDU session establishment request may include a PDU session ID, a requested PDU session type, a requested SSC mode, 5GSM capability, a PCO, an SM PDU DN request container, and/or L4S support indication or ECN-capable IPsec SA indication information. If the N3IWF has transmitted the ECN or L4S support indication information to the AMF during the 5GC registration process in operation 402, the N3IWF may not include separate ECN or L4S support indication information in operation 403.

In operation 404 and operation 405, the AMF may select an SMF and transmit a PDU session-related session management context generation request message (Nsmf_PDUSession_CreateSMContext Request) including L4S support indication, ECN capable IPsec SA indication information, or the like to the SMF.

In operation 406, the SMF may generate an SM context, based on the PDU session-related session management context generation request message including the L4S support indication or ECN capable IPsec SA indication information received from the AMF in operation 405, and may transfer an SM context ID to the AMF through a PDU session-related session management context generation request response (Nsmf_PDUSession_CreateSMContext Request response) message.

In operation 407, the SMF may select a PCF through a PCF selection process, based on information such as the SUPI.

In operation 408 to operation 410, the SMF may receive PDU session-related policy information (Npcf_SMPolicyControl_Create Response) from the PCF. Policy information transmitted from the PCF to the SMF may include QoS information including L4S support indication information within the corresponding PDU session, according to a network operator configuration or the like.

In operation 411, the SMF may perform a UPF selection operation, based on the policy information received from the PCF. If there is information on QoS that supports an L4S service in the policy information received from the PCF, the SMF may select a UPF operation for L4S service support, include the operation information in an N4 session establishment request message as an N4 rule, and transmit the same. For example, when the N3IWF is not able to directly mark the congestion information in the IP header but is able to transmit the same through a GTP-U extension header, the SMF may include a QoS monitoring operation-related requirement for receiving the congestion information in an N4 rule and transfer the same to the UPF. In addition, when the N3IWF is unable to mark the congestion information in the IP header, the SMF may select a UPF that supports the same.

In operations 412 and 413, an N4 rule including the packet detection rule of the UPF, the operation of marking congestion information in the IP header by the UPF, the operation of receiving congestion information through the GTP-U extended header through QoS monitoring, and the like may be included in an N4 session establishment request message, and then transmitted to the UPF, based on the determination result of the SMF in operation 411. Thereafter, the UPF may transmit an N4 session establishment request response message including CN tunnel info, etc. to the SMF.

In operation 414, the SMF may transfer N2 SM information including L4S service-supporting QoS information and L4S support indication information to the AMF. If the SMF recognizes, while generating information for selecting the UPF in operation 411, that the N3IWF does not support an operation of directly marking congestion information in the IP header, the SMF may include L4S support indication and congestion control information transmission request information through the GTP-U extension header in N2 SM information, and transfer the same to the AMF through a Namf_Communication_N1N2MessageTransfer message.

In operation 415, the AMF may transfer information such as a PDU session establishment-related QoS profile and related QFI, a PDU session ID, PDU session establishment acceptance, and/or an L4S support indicator to the N3IWF through an N2 PDU session request message.

In operation 416, the N3IWF may determine the number of IPsec Child SAs between the UE and the N3IWF, based on the information received from the AMF. If a QoS flow requiring L4S service support exists among the PDU session establishment-related information received from the AMF, the N3IWF may determine the generation of an IPsec Child SA by considering the QoS flow requiring L4S service support. Due to a security reason, the N3IWF may not provide a service using ECN among services using non-3GPP access according to the selection of a UE or a service provider.

For example, the N3IWF may receive, from the AMF, information indicating that there are four general QoS flows and one QoS flow to which the L4S service needs to be provided. Based on this information, the N3IWF may determine that the four general QoS flows use one IPsec SA as IPsec Child SA #1, and the one QoS flow to which the L4S service needs to be provided uses a separate IPsec SA channel as IPsec Child SA #2. In this case, the N3IWF may determine a connection of at least two IPsec Child SAs including an IPsec Child SA for transmitting a general QoS flow connected to the same UE, an IPsec Child SA for transmitting a QoS flow supporting an L4S service via ECN marking, and the like.

In operation 417a and operation 417b, if the N3IWF has determined to generate two IPsec Child SAs, the N3IWF may transmit one or more QFIs, DSCP values, additional QoS information, etc. for IPsec Child SA #1 to the UE to perform a first IPsec SA establishment operation.

Thereafter, in operation 417c and operation 417d, the N3IWF may transmit one or more QFIs, DSCP values, additional QoS information, and the like for an additional IPsec child connection to the UE, and may establish an additional IPsec SA with the UE. If the additional IPsec SA-associated QoS flow is a QoS flow supporting the L4S service, the N3IWF may include information such as an L4S support indication in the additional QoS information, and transmit the same to the UE to transfer operation request information for supporting the L4S service.

In operation 418, after all the IPsec Child SAs are configured, the N3IWF may transfer a PDU session establishment approval message received in operation 415 to the UE through the signaling IPsec SA.

In operation 419, the N3IWF may transmit a PDU session response message including N2 SM information including AN tunnel information to the AMF.

In operation 420 to operation 423, the AMF may transfer information including the SM context ID and the N2 SM information received from the N3IWF, to the SMF through a PDU session-related SM context update (Nsmf_PDUSession_UpdateSMContext Request) message. The SMF may transfer AN tunnel information to the UPF through an N4 session modification process. Thereafter, the UPF may transfer the N4 session change response message to the SMF, and the SMF may transmit a response message to the SM context update request to the AMF.

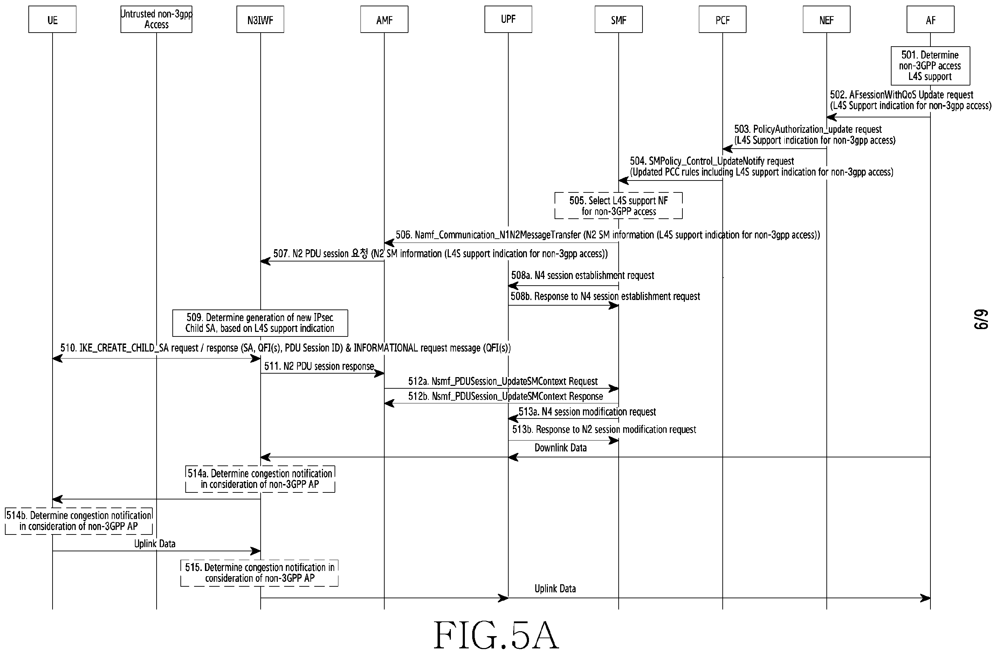

FIG. 5A is a flow chart illustrating an operation and a method of updating a QoS flow for L4S support by using a PDU session modification procedure when receiving L4S service support request information from an AF in a non-3GPP access environment according to an embodiment of the disclosure.

In operation 500, the UE may transmit a request message for establishing an N3WIF and IPsec SA connection and 5GC registration. The UE may receive information including information on the N3IWF and the related IP address, etc., based on information received from an untrusted non-3GPP access network. Thereafter, the UE may select an N3IWF, based on the information received from the untrusted non-3GPP access network, and may obtain IP address information of the selected N3IWF. The UE may initiate an IKE initial exchange to configure an IPsec security connection (SA) with the selected N3IWF. All subsequent IKE messages may be encrypted and protected for integrity by using an IKE SA configured in this operation. The UE may transmit an IKE_AUTH request message to initiate an IKE_AUTH exchange. The N3IWF may respond with an IKE_AUTH response message including an EAP-Request/5G-Start packet. The EAP-Request/5G-Start packet may notify the UE to start an EAP-5G session. The UE may transmit an IKE_AUTH request including an EAP-Response/5G-NAS packet including an access network parameter (AN parameter) and a registration request message. The AN parameter may include information used by the N3IWF to select an AMF in the 5G core network. This information may include a GUAMI, a selected PLMN ID, requested NSSAI, establishment cause, etc. The establishment cause may provide a reason for requesting a signaling connection with the 5GC. Whether the UE includes the requested NSSAI as a part of an AN parameter and the method of including the same may differ according to a value of an access stratum connection establishment NSSAI inclusion mode parameter. The registration request may include an indication that selection of an N3IWF by the UE is supported based on a slice that the UE intends to use via untrusted non-3GPP access. The N3IWF may select an AMF, based on the received AN parameter and a local policy. Thereafter, the N3IWF may transfer the registration request received from the UE to the selected AMF via an N2 message. The selected AMF may determine to transmit a NAS identity request message to the UE to request the SUCI. This NAS message and all subsequent NAS messages may be protected within an EAP/5G-NAS packet and transmitted to the UE. The AMF may determine to authenticate the UE by using an AUSF. The AMF may transmit a NAS security mode command to the UE to activate NAS security. The N3IWF having received the NAS security mode command message may include the same in the EAP/5G-NAS packet and transfer the same to the UE. The UE may complete the EAP-AKA' authentication, generate a NAS security context and an N3IWF key, and transmit an EAP/5G-NAS packet including a NAS security mode completion message. The N3IWF may transfer the NAS security mode completion message to the AMF. When receiving the NAS security mode completion, the AMF may transmit an NGAP initial context setup request message including the N3IWF key to the N3IWF. This may trigger the N3IWF to transmit EAP-Success to the UE to complete the EAP-5G session and prevent further exchange of EAP-5G packets. An IPsec SA between the UE and the N3IWF may be established using a common N3IWF key generated by the UE and received by the N3IWF. After the signaling IPsec SA establishment, the N3IWF may transmit an NGAP initial context setup response to the AMF to notify that a UE context including AN security has been generated. The signaling IPsec SA needs to be configured to operate in a tunnel mode, and the N3IWF may assign an "inner" IP address to the UE. All subsequent NAS messages exchanged between the UE and the N3IWF may be transmitted through the signaling IPsec SA and transferred through TCP/IP. The UE may transmit a NAS message in a TCP/IP packet in which the source address is the "internal" IP address of the UE and the destination address is NAS_IP_ADDRESS. Similarly, the N3IWF may transmit a NAS message in a TCP/IP packet in which the source address is NAS_IP_ADDRESS and the destination address is the "internal" IP address of the UE. A TCP connection used for reliable NAS transmission between the UE and the N3IWF may be started by the UE immediately after the signaling IPsec SA is configured. The AMF may determine the requested NSSAI allowed by the subscribed S-NSSAI(s). The AMF may transmit an NAS registration approval message through an N2 message to be transmitted to the N3IWF. The N2 message may include an allowed NSSAI for the access type of the UE. The allowed NSSAI may be a part of a slice supported by the selected N3IWF. The N3IWF may transfer a NAS registration acceptance message to the UE through the signaling IPsec SA. Operation 500 may correspond to operation 401 of FIG. 4A.

In operation 501, the AF may determine an L4S service support request in a non-3GPP access-based service.

In operation 502, the AF may transfer L4S service support request information such as an L4S support indication for non-3GPP access to the NEF through an AFsessionWithQoS Update request message, based on L4S support indication information.

In operation 503, the NEF may perform the following operation after receiving the request information including the L4S support request, the congestion report request, etc. from the AF in operation 502 through a policy approval request process for the PCF.

The NEF may identify subscriber information regarding the AF request to the UDM. When the subscriber information included in the AF request is a generic public subscription identifier (GPSI), the NEF may request to substitute the same for a subscription permanent identifier (SUPI), which is used to refer to a subscriber inside the 5GC network. When the subscriber information included in the AF request is subscriber group information, the NEF may request to substitute the subscriber group information inside the 5GC network for a group identifier inside the 5G network. When the subscriber information included in the AF request is subscriber group information and may be substituted for a list of multiple subscriber information, the NEF may request such substitution through a UDM entity.

The NEF may perform an approval request for an AF request to the UDM entity in order to identify from the UDM entity whether an AF identifier, information on a service requested by the AF, and subscriber information comply with a subscription policy of the service provider.

In operation 504, the PCF may determine to update a PCC rule including L4S/ECN congestion control information, based on a request received from the AF. When the PCF determines, according to the service provider policy, to provide the L4S/ECN service, the PCF may perform an SM policy control update notification procedure. The PCF may include an L4S/ECN-related policy and charging control (PCC) rule in an SM policy control update notification request message and transfer the same to the SMF. The L4S/ECN-related PCC rule may include the following information. Service data flow (SDF) information is information that may identify a service flow to which L4S/ECN is to be applied. The SDF information may be expressed as a service data flow template. The SDF information be expressed by an IP source/destination address or range and a source/reception port number or range. Alternatively, the SDF information may be expressed as a value of a fully qualified domain name (FQDN) or a FQDN range, for example, a FQDN range expressed in a regular expression format. L4S/ECN marking-related information may include an L4S/ECN marking policy and an L4S/ECN congestion experience bit marking policy. The L4S/ECN marking policy may include a policy including whether L4S/ECN marking is supported, an L4S/ECN marking version, and L4S/ECN marking support using information of the control plane.

In operation 505, after receiving the updated PCC rule including the L4S support indication information, the SMF may perform a determination regarding an operation for L4S support and a selection of an NF to provide the same. In order to perform a determination for L4S support, it may be assumed that the SMF has received, during the PDU session establishment process, whether the IPsec SA supports ECN/L4S and a type of congestion information marking scheme that the N3IWF supports or has known the same according to configuration of the network operator. When there is information on a QoS supporting an L4S service in the policy information received from the PCF, the SMF may select a UPF operation for supporting the L4S service, include the corresponding operation information in an N4 session establishment request message, as an N4 rule, and transmit the same. For example, when the N3IWF is not able to directly mark the congestion information in the IP header but is able to transmit the same through a GTP-U extension header, the SMF may include a QoS monitoring operation-related requirement for receiving the congestion information in an N4 rule and transfer the same to the UPF. In addition, when the N3IWF is unable to mark the congestion information in the IP header, the SMF may select a UPF that supports the same. The SMF may perform a UPF selection operation, based on the policy information received from the PCF. The SMF may determine whether to accept the L4S service support request for the specific QoS flow, based on a pre-configured policy or information transferred during the PDU session establishment process. The SMF may receive information on whether the IPsec SA supports ECN from the AMF or the UE during the PDU session establishment process, and may determine, based on the information, whether to accept the L4S service support request for the QoS flow of the specific UE, transferred from the AF. In addition, the SMF may determine whether to accept the L4S service support request for the specific QoS flow, based on whether the N3IWF satisfies the following conditions. In a case where the N3IWF is able to directly mark information on a congestion situation in a ToS field in an IP header, or a case where the N3IWF is able to mark congestion information in a GTP-U extension header and transmit the same to the UPF, it may be determined that the N3IWF can support the L4S service. In addition, in a case where a service via non-3GPP access is used, the SMF may determine whether to accept the L4S service request for the corresponding QoS flow using non-3GPP access when the N3IWF supports one or more marking methods for transferring congestion information and ECN/L4S service support is possible (ECN capable) in the IPsec SA section between the N3IWF and the UE.

In operation 506, the SMF may transfer N2 SM information including L4S service-supporting QoS information and L4S support indication information to the AMF. If the SMF recognizes, while generating information for selecting the UPF in operation 505, that the N3IWF does not support an operation of directly marking congestion information in the IP header, the SMF may include L4S support indication and congestion control information transmission request information through the GTP-U extension header in N2 SM information, and transfer the same to the AMF through a Namf_Communication_N1N2MessageTransfer message.

In operation 507, the AMF may transfer information such as a PDU session establishment-related QoS profile and related QFI, a PDU session ID, PDU session establishment acceptance, and/or an L4S support indicator to the N3IWF through an N2 PDU session request message.

In operations 508a and 508b, based on the determination result of the SMF in operation 505, the SMF may include, in an N4 session establishment request message, an N4 rule including the packet detection rule of the UPF, the operation of marking congestion information in the IP header by the UPF, the operation of receiving congestion information through the GTP-U extended header through QoS monitoring, and the like, and transmit the same to the UPF. Thereafter, the UPF may transmit an N4 session establishment request response message including CN tunnel info, etc. to the SMF.

In operation 509, the N3IWF may determine an update of an IPsec Child SA between the UE and the N3IWF, based on the information received from the AMF. If existing QoS flows are being transferred through an IPsec SA that does not support ECN/L4S and an L4S service support request is received by the N3IWF, the N3IWF may determine to establish a new IPsec SA connection supporting ECN/L4S for the corresponding QoS flow. For example, when five QoS flows not supporting the L4S service are being transmitted to one IPsec SA#1 from the N3IWF, one of the QoS flows may receive a request for provision of the L4S service. The N3IWF may determine the generation of an IPsec SA #2 for a QoS flow for supporting the L4S service, and update the QoS flow information for requesting the L4S service support from the existing IPsec SA #1 to the IPsec SA #2. To this end, the N3WIF may transmit an informational request message including QFI and additional QoS information relating to a Child SA, to update QoS flow and Child SA mapping information.

In operation 510, when the N3IWF determines to generate a new IPsec Child SA, the N3IWF may transmit QFI, a PDU session ID, etc. for the IPsec Child SA to the UE, and perform a new IPsec SA establishment operation for supporting the L4S service.

In operation 511, when a new IPsec Child SA supporting the L4S service is configured based on the N2 session request, the N3IWF may transfer the success or failure of the request to the AMF.

In operation 512 to operation 513, the AMF may transfer N2 SM information including whether request information for supporting the L4S service is successfully processed, to the SMF through a PDU session-related SM context update (Nsmf_PDUSession_UpdateSMContext Request) message. If QoS flow information, or the like is updated, the SMF may transfer the same to the UPF through an N4 session modification request operation.

In operation 514, a non-3GPP access point (e.g., Wi-Fi) may be added between the UE and the N3IWF. The UE may transmit and receive data to and from the N3IWF through the non-3GPP access point, and in this case, in relation to the structure of the IPsec, the IP header and payload transferred to the existing N3IWF may be defined as an inner IP packet. In the IPsec tunnel mode, an additional outer IP packet for including the corresponding inner IP packet in the payload may be defined. That is, in the IPsec SA section, an outer IP packet may be generated and transferred to the UE through the non-3GPP access point.

In operation 514a, when downlink data is transferred to the N3IWF, the N3IWF may perform an operation transferred through the SMF. In a case where downlink data is transferred from the UPF, if a congestion situation occurs in the N3IWF or a congestion occurs before the N3IWF, the N3IWF may perform CE marking on the corresponding ECN bit in the inner IP header, or may receive an IP packet having CE marking in the ECN bit and transmit the same as an inner packet to the UE. In addition, when the congestion occurs in the non-3GPP access network, the N3IWF may mark the corresponding congestion information in the ECN bit in the outer packet header and transfer the same to the UE.

In operation 514b, the UE having received the downlink data may distinguish the congestion information as to a section in which the corresponding congestion situation occurs, i.e., whether a congestion situation occurs in a non-3GPP access section or a congestion situation occurs inside the 5GC, and may generate congestion information, and transfer the same to the AS to perform queue management appropriate to each situation.

In operation 515, when the congestion situation of a non-3GPP access section is marked via an outer header during uplink data transmission, the N3IWF may determine whether to generate congestion information, based on the ECN bit information of the outer header, with respect to the information generated in the non-3GPP access network, and may transfer a scheme of marking the congestion information and transmitting the same, based on the determination result of the SMF in operation 505.

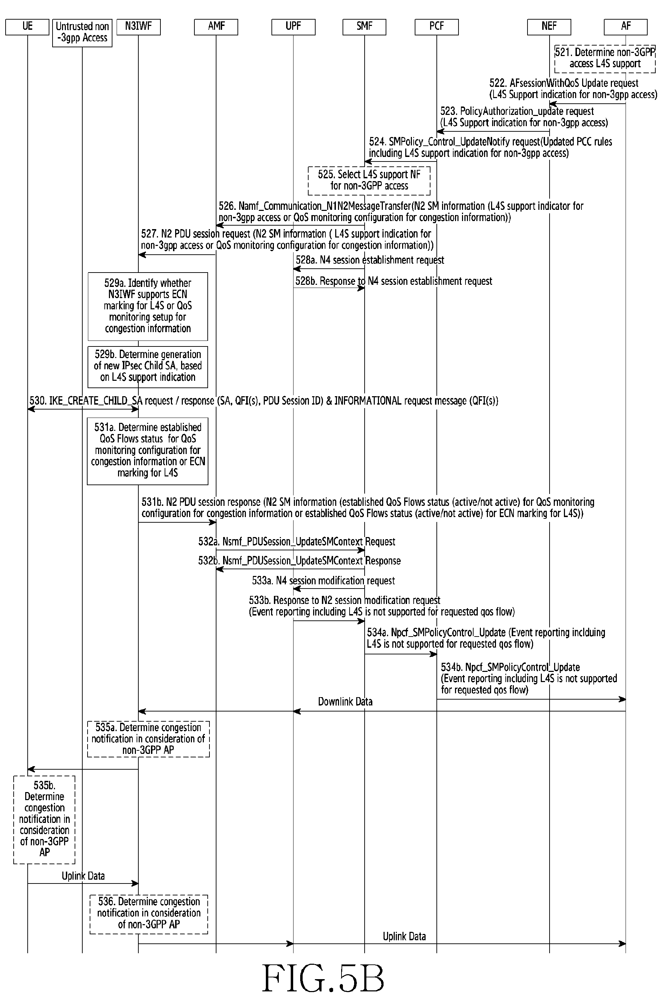

FIG. 5B is a flow chart illustrating an operation and a method for updating a QoS flow for L4S support by using a PDU session modification procedure when receiving L4S service support request information from an AF in a non-3GPP access environment according to an embodiment of the disclosure.

In operation 520, the UE may transmit a request message for establishing an N3WIF and IPsec SA connection and 5GC registration. The UE may receive information including information on the N3IWF and the related IP address, etc., based on information received from an untrusted non-3GPP access network. Thereafter, the UE may select an N3IWF, based on the information received from the untrusted non-3GPP access network, and may obtain IP address information of the selected N3IWF. The UE may initiate an IKE initial exchange to configure an IPsec security connection (SA) with the selected N3IWF. All subsequent IKE messages may be encrypted and protected for integrity by using an IKE SA configured in this operation. The UE may transmit an IKE_AUTH request message to initiate an IKE_AUTH exchange. The N3IWF may respond with an IKE_AUTH response message including an EAP-Request/5G-Start packet. The EAP-Request/5G-Start packet may notify the UE to start an EAP-5G session. The UE may transmit an IKE_AUTH request including an EAP-Response/5G-NAS packet including an access network parameter (AN parameter) and a registration request message. The AN parameter may include information used by the N3IWF to select an AMF in the 5G core network. This information may include a GUAMI, a selected PLMN ID, requested NSSAI, establishment cause, etc. The establishment cause may provide a reason for requesting a signaling connection with the 5GC. Whether the UE includes the requested NSSAI as a part of an AN parameter and the method of including the same may differ according to a value of an access stratum connection establishment NSSAI inclusion mode parameter. The registration request may include an indication that selection of an N3IWF by the UE is supported based on a slice that the UE intends to use via untrusted non-3GPP access. The N3IWF may select an AMF, based on the received AN parameter and a local policy. Thereafter, the N3IWF may transfer the registration request received from the UE to the selected AMF via an N2 message. The selected AMF may determine to transmit a NAS identity request message to the UE to request the SUCI. This NAS message and all subsequent NAS messages may be protected within an EAP/5G-NAS packet and transmitted to the UE. The AMF may determine to authenticate the UE by using an AUSF. The AMF may transmit a NAS security mode command to the UE to activate NAS security. The N3IWF having received the NAS security mode command message may include the same in the EAP/5G-NAS packet and transfer the same to the UE. The UE may complete the EAP-AKA' authentication, generate a NAS security context and an N3IWF key, and transmit an EAP/5G-NAS packet including a NAS security mode completion message. The N3IWF may transfer the NAS security mode completion message to the AMF. When receiving the NAS security mode completion, the AMF may transmit an NGAP initial context setup request message including the N3IWF key to the N3IWF. This may trigger the N3IWF to transmit EAP-Success to the UE to complete the EAP-5G session and prevent further exchange of EAP-5G packets. An IPsec SA between the UE and the N3IWF may be established using a common N3IWF key generated by the UE and received by the N3IWF. After the signaling IPsec SA establishment, the N3IWF may transmit an NGAP initial context setup response to the AMF to notify that a UE context including AN security has been generated. The signaling IPsec SA needs to be configured to operate in a tunnel mode, and the N3IWF may assign an "inner" IP address to the UE. All subsequent NAS messages exchanged between the UE and the N3IWF may be transmitted through the signaling IPsec SA and transferred through TCP/IP. The UE may transmit a NAS message in a TCP/IP packet in which the source address is the "internal" IP address of the UE and the destination address is NAS_IP_ADDRESS. Similarly, the N3IWF may transmit a NAS message in a TCP/IP packet in which the source address is NAS_IP_ADDRESS and the destination address is the "internal" IP address of the UE. A TCP connection used for reliable NAS transmission between the UE and the N3IWF may be started by the UE immediately after the signaling IPsec SA is configured. The AMF may determine the requested NSSAI allowed by the subscribed S-NSSAI(s). The AMF may transmit an NAS registration approval message through an N2 message to be transmitted to the N3IWF. The N2 message may include an allowed NSSAI for the access type of the UE. The allowed NSSAI may be a part of a slice supported by the selected N3IWF. The N3IWF may transfer a NAS registration acceptance message to the UE through the signaling IPsec SA. Operation 520 may correspond to operation 401 of FIG. 4A.

In operation 521, the AF may determine an L4S service support request in a non-3GPP access-based service.

In operation 522, the AF may transfer L4S service support request information such as an L4S support indication for non-3GPP access to the NEF through an AFsessionWithQoS Update request message, based on L4S support indication information.

In operation 503, the NEF may perform the following operation after receiving the request information including the L4S support request, the congestion report request, etc. from the AF in operation 522 through a policy approval request process for the PCF.

The NEF may identify subscriber information regarding the AF request to the UDM. When the subscriber information included in the AF request is a generic public subscription identifier (GPSI), the NEF may request to substitute the same for a subscription permanent identifier (SUPI), which is used to refer to a subscriber inside the 5GC network. When the subscriber information included in the AF request is subscriber group information, the NEF may request to substitute the subscriber group information inside the 5GC network for a group identifier inside the 5G network. When the subscriber information included in the AF request is subscriber group information and may be substituted for a list of multiple subscriber information, the NEF may request such substitution through a UDM entity.

The NEF may perform an approval request for an AF request to the UDM entity in order to identify from the UDM entity whether an AF identifier, information on a service requested by the AF, and subscriber information comply with a subscription policy of the service provider.

In operation 524, the PCF may determine to update a PCC rule including L4S/ECN congestion control information, based on a request received from the AF. When the PCF determines, according to the service provider policy, to provide the L4S/ECN service, the PCF may perform an SM policy control update notification procedure. The PCF may include an L4S/ECN-related policy and charging control (PCC) rule in an SM policy control update notification request message and transfer the same to the SMF. The L4S/ECN-related PCC rule may include the following information. Service data flow (SDF) information is information that may identify a service flow to which L4S/ECN is to be applied. The SDF information may be expressed as a service data flow template. The SDF information be expressed by an IP source/destination address or range and a source/reception port number or range. Alternatively, the SDF information may be expressed as a value of a fully qualified domain name (FQDN) or a FQDN range, for example, a FQDN range expressed in a regular expression format. L4S/ECN marking-related information may include an L4S/ECN marking policy and an L4S/ECN congestion experience bit marking policy. The L4S/ECN marking policy may include a policy including whether L4S/ECN marking is supported, an L4S/ECN marking version, and L4S/ECN marking support using information of the control plane.

In operation 525, after receiving the updated PCC rule including the L4S support indication information, the SMF may perform a determination regarding an operation for L4S support and a selection of an NF to provide the same. Specifically, the SMF may perform selection of an NF that supports ECN marking for L4S according to the policy of the network service provider, and in this case, the selected NF may be the NG-RAN or the UPF. According to the policy of the network service provider, when the SMF selects a UPF as an NF entity for supporting the L4S service, the ECN marking operation information may be included in a N4 session establishment request message as a N4 rule and transmitted. For example, when the N3IWF is unable to perform congestion information marking directly in an IP header, but is able to transmit congestion information to the UPF through a GTP-U extension header, the SMF may include a QoS monitoring operation-related requirement for congestion information reception in an N4 rule and transfer the same to the UPF. The SMF may determine whether to accept the L4S service support request for a specific QoS flow, based on a pre-configured policy or information transferred from the NG-RAN during the PDU session establishment process. The SMF may perform selection of an NF supporting an ECN marking operation for L4S, based on the updated PCC rule including the ECN marking for L4S indicator information received from the PCF. Thereafter, the SMF may transfer N2 information including the ECN marking for L4S indicator or QoS monitoring configuration for congestion information to the N3IWF via the AMF during the PDU session establishment or modification process. If the N3IWF supports the ECN marking for L4S indicator operation, based on the information received from the SMF, the N3IWF may transfer information of the established QoS flows status (active) for ECN marking for L4S to the SMF through the AMF. If the N3IWF does not support the ECN marking for L4S indicator operation, the N3IWF may transfer the information of the established QoS flows status (inactive) for ECN marking for L4S to the SMF through the AMF. In addition, when the N3IWF supports the QoS monitoring configuration for congestion information operation, based on the information received from the SMF, the N3IWF may transfer information of the established QoS flows status (active) for QoS monitoring configuration for congestion information to the SMF through the AMF. If the N3IWF does not support the QoS monitoring configuration for congestion information, the N3IWF may transfer information on the established QoS flows status (inactive) for QoS monitoring configuration for congestion information to the SMF through the AMF. If the N3IWF does not support the QoS monitoring configuration for congestion information and the ECN marking for L4S, the SMF may determine that the QoS flow using the N3IWF does not support the ECN marking operation in consideration of L4S. The SMF may determine, based on the L4S support status information (e.g., established QoS flows status (active/inactive) for QoS monitoring configuration for congestion information or established QoS flows status (active/inactive) for ECN marking for L4S) transmitted from the N3IWF or the UPF, whether to accept a request for L4S service support for a specific QoS flow of the UE, transferred from the AF.

In operation 526, when the SMF has selected an ECN marking operation using an NG-RAN according to the NF selection result for performing the ECN marking operation for supporting an L4S service, the SMF may transfer N2 SM information including QoS flow information for supporting an L4S service and L4S support indicator information to the AMF. When the SMF selects an ECN marking operation using the UPF through operation 525, or when the SMF has received, from the N3IWF, information indicating that the operation of directly marking congestion information in an IP header is not supported, the SMF may include, in N2 SM information, QoS flow information supporting L4S service and configuration information for congestion information QoS monitoring for receiving congestion information through a GTP-U extended header, and transfer the same to the AMF through a Namf_Communication_N1N2MessageTransfer message.

In operation 527, the AMF may transfer information such as a PDU session establishment-related QoS profile and related QFI, a PDU session ID, PDU session establishment acceptance, and/or an L4S support indicator to the N3IWF through an N2 PDU session request message.

In operations 528a and 528b, based on the determination result of the SMF in operation 525, the SMF may include, in an N4 session establishment request message, an N4 rule including the packet detection rule of the UPF, and transmit the same to the UPF. The UPF may transmit an N4 session establishment request response message including CN tunnel info, etc. to the SMF. When the SMF determines the L4S service support using the UPF in operation 525, the SMF may transfer, to the UPF, an N4 rule including ECN marking operation, QoS monitoring configuration information for receiving congestion information for ECN marking from the NG-RAN, etc.

In operation 529a, the N3IWF may select an L4S support operation which can be supported by the N3IWF according to the capability of the N3IWF and/or the operation request message for L4S support requested by the SMF. When the SMF determines to perform the ECN marking operation for supporting the L4S service using the NG-RAN in operation 525 and only the ECN marking for LS4 indicator is included in the N2 SM information transferred to the N3IWF through operation 526 and operation 527, the N3IWF may determine to perform operation 529b according to whether the operation is accepted.

In an embodiment, when the SMF determines to perform the ECN marking operation for supporting the L4S service using the UPF in operation 525 and the QoS monitoring configuration for congestion information is included in the N2 SM information transferred to the N3IWF through operation 526 and operation 527, the N3IWF may determine to perform operation 529b according to whether the operation is accepted. When the N3IWF does not support both the congestion information monitoring operation and the ECN marking operation for supporting the L4S service, operation 529b and operation 530 may be omitted. Thereafter, the N3IWF may transfer that L4S service is not supported for the corresponding QoS flow to the SMF through operation 531 and operation 532.

In operation 529b, the N3IWF may determine, based on the information received from the AMF, to update the IPsec Child SA between the UE and the N3IWF. In a case where existing QoS flows are being transferred through an IPsec SA that does not support ECN/L4S, when the N3IWF receives an L4S service support request, a new IPsec SA connection that supports ECN/L4S may be determined for the QoS flow. For example, when five QoS flows not supporting the L4S service are being transmitted to one IPsec SA#1 from the N3IWF, one of the QoS flows may receive a request for provision of the L4S service. The N3IWF may determine the generation of an IPsec SA #2 for a QoS flow for supporting the L4S service, and update the QoS flow information for requesting the L4S service support from the existing IPsec SA #1 to the IPsec SA #2. To this end, the N3WIF may transmit an informational request message including QFI and additional QoS information relating to a Child SA, to update QoS flow and Child SA mapping information.

In operation 530, when the N3IWF determines to generate a new IPsec Child SA, the N3IWF may transmit QFI, a PDU session ID, etc. for the IPsec Child SA to the UE, and perform a new IPsec SA establishment operation for supporting the L4S service. In addition, when the N3IWF is able to support an operation for an L4S service through operation 529a, but the N3IWF does not have information on whether the L4S service is supported by the UE and the non-3GPP access network, the N3IWF may transfer, to the UE, information for identifying whether the L4S service is supported by the UE and the non-3GPP access network. The information for identifying whether the L4S service is supported, which is transmitted from the N3IWF to the UE, may include an ECN marking for L4S indicator, etc. When the UE has received an L4S support indicator for a specific QoS flow from the N3IWF, the UE may check whether L4S is supported in the section between the UE and the non-3GPP access, or whether an L4S-supported IPsec Child SA has been generated, and when the UE is unable to determine whether L4S is separately supported, the UE may perform an operation for checking whether L4S is supported in an uplink packet.

In operation 531 (531a and/or 531b), when a new IPsec Child SA supporting the L4S service is configured based on the N2 session request, the N3IWF may transfer, to the AMF, whether the N3IWF operation request supporting the L4S service is accepted or supported. The N3IWF may include, in N2 SM information, whether the SMF accepts and supports the N3IWF operation request for supporting the L4S service, as established QoS flows status (active/inactive) for QoS monitoring configuration for congestion information or established QoS flows status (active/inactive) for ECN marking for L4S information, and may transfer the same to the AMF. Through operation 530, when the UE or the non-3GPP access network does not support the generation of an IPsec Child SA supporting the L4S services, or when the L4S function is not supported by at least one entity among the UE and the non-3GPP access network, the N3IWF may transfer, to the AMF, N2 SM information including information indicating that the N3IWF operation request for supporting the L4S service is rejected or is not supported (established QoS Flows status (inactive) for QoS monitoring configuration for congestion information or established QoS Flows status (inactive) for ECN marking for L4S).

In operation 532 (532a and/or 532b) to operation 533 (533a and/or 533b), the AMF may transfer N2 SM information including whether the request information for the L4S service support is successfully processed to the SMF through a PDU session-related SM context update (Nsmf_PDUSession_UpdateSMContext Request) message. When the QoS flow information, or the like in the N2 SM information is updated, the SMF may transfer the updated information to the UPF through an N4 session modification request operation. When the SMF having received, through operation 532a, information indicating that the N3IWF does not support an operation for supporting the L4S service in the N2 SM information transmitted from the NG-RAN, the SMF may transfer the information to the AF through the PCF. In operation 522 and operation 523, the L4S service-related requirement information transmitted from the AF to the PCF may include, in addition to L4S support indication information, requirement information requesting reporting an event to the AF when it is determined that the L4S service is not supported. In operation 524, when the SMF has received established QoS flows status (inactive) for QoS monitoring configuration for congestion information and/or established QoS flows status (inactive) for ECN marking for L4S information from the N3IWF through a policy control request trigger (PCRT), and the SMF has received that L4S service support for the corresponding QoS flow is not available, the PCF may request the SMF to report the same to the PCF.

In operation 534 (534a and/or 534b), if the SMF receives, from the N3IWF, information indicating the L4S service for the corresponding QoS flow is not supported, the SMF may transfer the information to the PCF through event reporting, indicating that the L4S service for the corresponding QoS flow is not supported. Based on the event reporting message received from the SMF, the PCF may transfer, to the AF, an event reporting message indicating that L4S service for a specific QoS flow is not supported, according to the AF request.

In operation 535, a non-3GPP access point (e.g., Wi-Fi) may be added between the UE and the N3IWF. The UE may transmit and receive data to and from the N3IWF through the non-3GPP access point, and in this case, in relation to the structure of the IPsec, the IP header and payload transferred to the existing N3IWF may be defined as an inner IP packet. In the IPsec tunnel mode, an additional outer IP packet for including the corresponding inner IP packet in the payload may be defined. That is, in the IPsec SA section, an outer IP packet may be generated and transferred to the UE through the non-3GPP access point.

In operation 535a, when downlink data is transferred to the N3IWF, the N3IWF may perform an operation transferred through the SMF. In a case where downlink data is transferred from the UPF, if a congestion situation occurs in the N3IWF or a congestion occurs before the N3IWF, the N3IWF may perform CE marking on the corresponding ECN bit in the inner IP header, or may receive an IP packet having CE marking in the ECN bit and transmit the same as an inner packet to the UE. In addition, when the congestion occurs in the non-3GPP access network, the N3IWF may mark the corresponding congestion information in the ECN bit in the outer packet header and transfer the same to the UE.

In operation 535b, the UE having received the downlink data may distinguish the congestion information as to a section in which the corresponding congestion situation occurs, i.e., whether a congestion situation occurs in a non-3GPP access section or a congestion situation occurs inside the 5GC, and may generate congestion information, and transfer the same to the AF to perform queue management appropriate to each situation.

In operation 536, when the congestion situation of a non-3GPP access section is marked via an outer header during uplink data transmission, the N3IWF may determine whether to generate congestion information, based on the ECN bit information of the outer header, with respect to the information generated in the non-3GPP access network. For the congestion information marking scheme, the N3IWF may perform marking based on the details determined by the SMF in operation 525. In addition, based on the details determined by the SMF in operation 525, the N3IWF may transmit the congestion information to the UPF and the UPF may perform the marking.

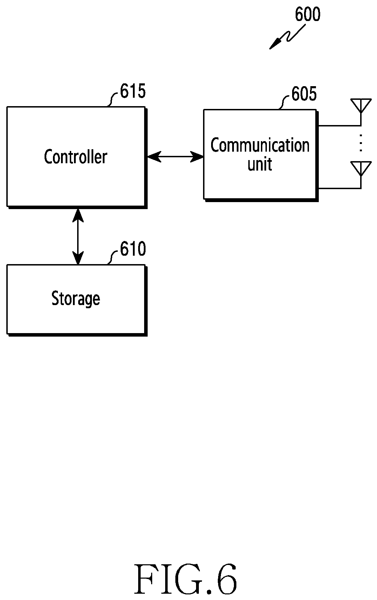

FIG. 6 illustrates an example of a functional structure of a UE 600 according to an embodiment of the disclosure. As used herein, such terms as "... unit" and "... er" refer to a unit configured to process at least one function or operation, and may be implemented as hardware, software, or a combination of hardware and software. The UE in FIG. 6 may correspond to the user equipment (UE) described in FIGS. 1 to 5.

Referring to FIG. 6, the UE may include a communication unit 605, a storage 610, and a controller 615.

The communication unit 605 may perform functions for transmitting/receiving signals through radio channels. For example, the wireless communication unit 605 may performs functions of conversion between baseband signals and bitstrings according to the physical layer specifications of the system. For example, during data transmission, the communication unit 605 may encode and modulate a transmitted bitstring to generate complex symbols. In addition, during data reception, the communication unit 605 may demodulate and decode a baseband signal to restore a received bitstring. In addition, the communication unit 605 may up-convert a baseband signal into an RF band signal and then transmit the converted RF band signal through an antenna, and down-convert an RF band signal received through an antenna into a baseband signal. For example, the communication unit 605 may include a transmission filter, a reception filter, an amplifier, a mixer, an oscillator, a DAC, and an ADC.

In addition, the communication unit 605 may include multiple transmission/reception paths. Moreover, the communication unit 605 may include at least one antenna array including multiple antenna elements. In terms of hardware, the communication unit 605 may include a digital circuit and an analog circuit (e.g., a radio frequency integrated circuit (RFIC)). The digital circuit and the analog circuit may be implemented as a single package. In addition, the communication unit 605 may include multiple RF chains. Furthermore, the communication unit 605 may perform beamforming.

The communication unit 605 may transmit and receive signals as described above. Accordingly, all or part of the communication unit 605 may be referred to as a "transmitter", a "receiver", or a "transceiver". In addition, as used in the following description, the meaning of "transmission and reception performed through a radio channel" includes the meaning that the above-described processing is performed by the communication unit 605.

The storage 610 may store basic programs, application programs, and data, such as configuration information, for the operation of the UE. The storage unit 610 may include a volatile memory, a nonvolatile memory, or a combination of a volatile memory and a nonvolatile memory. In addition, the storage 610 may provide the stored data at the request of the controller 615.

The controller 615 may control the overall operation of the UE. For example, the controller 615 may transmit and receive signals through the communication unit 605. In addition, the controller 615 records data in the storage 610 and reads the data from the storage 610. In addition, the controller 615 may perform functions of protocol stacks required by communication specifications. To this end, the controller 615 may include at least one processor or microprocessor, or may be a part of a processor. In addition, a part of the communication unit 605 and the controller 615 may be referred to as a communication processor (CP). According to various embodiments, the controller 615 may control to perform synchronization by using a wireless communication network. For example, the controller 615 may control the UE to perform the operations according to various embodiments.

According to various embodiments of the disclosure, the UE may be configured by a mobile equipment (ME) and a universal mobile telecommunications service (UMTS) subscriber identity module (USIM). The ME may include a mobile terminal (MT) and a terminal equipment (TE). The MT may be a part in which a radio access protocol is operated, and the TE may be a part in which a control function is operated. For example, in the case of a wireless communication terminal (e.g., mobile phone), the MT and the TE may be integrated, and in the case of a notebook, the MT and the TE may be separated. As used herein, the ME and the TE may be represented as separate entities according to the operations of the respective components, but the disclosure is not limited thereto, and in describing various embodiments of the disclosure, the ME and the TE as a whole may be represented as the terminal (e.g., UE) or the ME may be represented as the terminal.

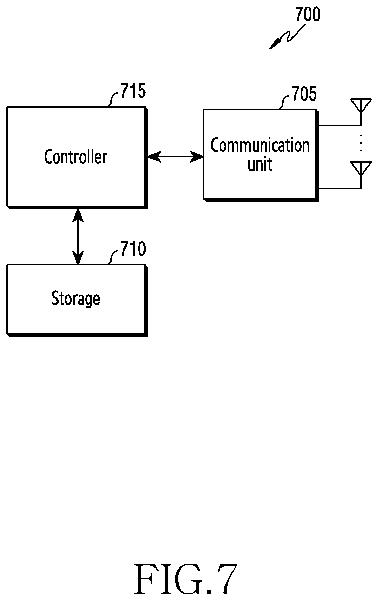

FIG. 7 illustrates an example of a functional structure of a network entity 700 according to an embodiment of the disclosure. FIG. 7 illustrates components of a network entity in a wireless communication system according to various embodiments of the disclosure. As used herein, such terms as "... unit" and "... er" refer to a unit configured to process at least one function or operation, and may be implemented as hardware, software, or a combination of hardware and software. The network entity in FIG. 7 may correspond to the network entities or network functions described in FIGS. 1 to 5.

Referring to FIG. 7, the network entity 700 according to an embodiment of the disclosure may include a communication unit 705, a storage 710, and a controller 715.

The communication unit 705 may provide an interface for communicating with other devices in the network. That is, the communication unit 705 may convert a bitstring, transmitted from the core network device to any other device, into a physical signal, and convert a physical signal, received from any other device, into a bitstring. The communication unit 705 may transmit/receive signals. Accordingly, the communication unit 705 may be referred to as a modem, a transmitter, a receiver, or a transceiver. The communication unit 705 may be configured to enable the network entity to communicate with other devices or the system via a backhaul connection (e.g., wired backhaul or wireless backhaul) or via the network.

The storage 710 may store basic programs, application programs, and data, such as configuration information, for the operation of the network entity. The storage 710 may include a volatile memory, a nonvolatile memory, or a combination of a volatile memory and a nonvolatile memory. In addition, the storage 710 may provide the stored data at the request of the controller 715.

The controller 715 may control the overall operation of the network entity. For example, the controller 715 may transmit and receive signals through the communication unit 705. In addition, the controller 715 records data in the storage 710 and reads the data from the storage 710. To this end, the controller 715 may include at least one processor. According to various embodiments, the controller 715 may control to perform synchronization by using a wireless communication network. For example, the controller 715 may control the network entity to perform the operations according to various embodiments described below.

In the description of an embodiment of the disclosure, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The one or more programs include instructions that cause the electronic device to perform the methods according to embodiments of the disclosure as defined by the appended claims or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a non-3GPP interworking function (N3IWF) entity in a wireless communication system, the method comprising:
receiving, from a session management function (SMF) entity via an access and mobility management function (AMF) entity, session management information including an explicit congestion notification (ECN) marking indication for supporting low latency, low loss, and scalable throughput (L4S) in non-3GPP access;
determining a connection of an Internet protocol security (IPsec) Child security association (SA) for a quality of service (QoS) flow supporting the L4S; and
transmitting, to a terminal, a message for requesting the connection of the IPsec Child SA.

2. The method of claim 1, wherein the session management information comprises at least one of a protocol data unit (PDU) session ID, a QoS flow ID (QFI), or a QoS profile.

3. The method of claim 1, wherein the message comprises at least one of a PDU session ID, a QFI, a differentiated services field codepoint (DSCP) value, or additional QoS information.

4. The method of claim 1, wherein the session management information is included in an N2 PDU session request message, and
wherein the message comprises an IKE CREATE CHILD SA request message.

5. The method of claim 4, further comprising transmitting, to the AMF entity, an N2 PDU session response message including information on whether the connection of the IPsec Child SA is successfully performed,
wherein the N2 PDU session response message further comprises information on a state of the QoS flow.

6. A method performed by a user equipment in a wireless communication system, the method comprising:
receiving, from a non-3GPP interworking function (N3IWF) entity, a first message for requesting an Internet protocol security (IPsec) Child security association (SA) connection for a quality of service (QoS) flow supporting low latency, low loss, and scalable throughput (L4S); and
transmitting, to the N3IWF entity, a second message for a response to the first message.

7. The method of claim 6, wherein the first message further comprises at least one of a protocol data unit (PDU) session ID, a QoS flow ID (QFI), a differentiated services field codepoint (DSCP) value, or additional QoS information.

8. The method of claim 6, wherein the first message comprises an IKE CREATE CHILD SA request message.

9. A non-3GPP interworking function (N3IWF) entity in a wireless communication system, the N3IWF entity comprising:
a transceiver; and
a controller connected to the transceiver,
wherein the controller is configured to:
receive, from a session management function (SMF) entity via an access and mobility management function (AMF) entity, session management information including an explicit congestion notification (ECN) marking indication for supporting low latency, low loss, and scalable throughput (L4S) in non-3GPP access;
determine an Internet protocol security (IPsec) child security association (SA) connection for a quality of service (QoS) flow supporting the L4S; and
transmit, to a terminal, a message for requesting the IPsec Child SA connection.

10. The N3IWF entity of claim 9, wherein the session management information comprises at least one of a protocol data unit (PDU) session ID, a QoS flow ID (QFI), or a QoS profile.

11. The N3IWF entity of claim 9, wherein the message comprises at least one of a PDU session ID, a QFI, a differentiated services field codepoint (DSCP) value, or additional QoS information.

12. The N3IWF entity of claim 9, wherein the session management information is included in an N2 PDU session request message, and
wherein the message comprises an IKE CREATE CHILD SA request message.

13. The N3IWF entity of claim 9, wherein the controller is further configured to transmit, to the AMF entity, an N2 PDU session response message including information on whether the IPsec Child SA connection is successfully performed, and
wherein the N2 PDU session response message further comprises information on a state of the QoS flow.

14. A user equipment in a wireless communication system, the user equipment comprising:
a transceiver; and
a controller connected to the transceiver,
wherein the controller is configured to:
receive, from a non-3GPP interworking function (N3IWF) entity, a first message for requesting an Internet protocol security (IPsec) Child security association (SA) connection for a quality of service (QoS) flow supporting low latency, low loss, and scalable throughput (L4S); and
transmit, to the N3IWF entity, a second message for a response to the first message.

15. The user equipment of claim 14, wherein the first message comprises an IKE CREATE CHILD SA request message, and
wherein the IKE CREATE CHILD SA request message further comprises at least one of a packet data unit (PDU) session ID, a QoS flow ID (QFI), a differentiated services field codepoint (DSCP) value, or additional QoS information.
